(19) Europäisches Patentamt / European Patent Office / Office européen des brevets

(11) **EP 3 306 548 B1**

(12) **EUROPEAN PATENT SPECIFICATION**

(45) Date of publication and mention
of the grant of the patent:
**30.03.2022 Bulletin 2022/13**

(21) Application number: **16799170.2**

(22) Date of filing: **22.04.2016**

(51) International Patent Classification (IPC):
*G06Q 20/38* (2012.01)    *G06Q 20/32* (2012.01)
*G06Q 20/40* (2012.01)    *G06Q 30/06* (2012.01)
*H04L 29/06* (2006.01)

(52) Cooperative Patent Classification (CPC):
**G06Q 20/3276; G06Q 20/401; G06Q 30/06;
H04L 63/0807; H04L 63/0846;** H04L 2463/102

(86) International application number:
**PCT/CN2016/080017**

(87) International publication number:
**WO 2016/188281 (01.12.2016 Gazette 2016/48)**

(54) **INFORMATION INTERACTION METHOD, DEVICE AND SYSTEM**

INFORMATIONSINTERAKTIONSVERFAHREN, -VORRICHTUNG UND -SYSTEM

PROCÉDÉ, DISPOSITIF ET SYSTÈME D'INTERACTION D'INFORMATIONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.05.2015 CN 201510272052**

(43) Date of publication of application:
**11.04.2018 Bulletin 2018/15**

(73) Proprietor: **Advanced New Technologies Co., Ltd.
George Town, Grand Cayman KY1-9008 (KY)**

(72) Inventor: **XIA, Jupeng
Hangzhou 310099 (CN)**

(74) Representative: **Fish & Richardson P.C.
Highlight Business Towers
Mies-van-der-Rohe-Straße 8
80807 München (DE)**

(56) References cited:
CN-A- 102 369 547     CN-A- 103 139 210
GB-A- 2 478 712     US-A1- 2013 179 352
US-A1- 2013 238 503     US-A1- 2013 282 589
US-A1- 2014 143 150

**Description**

**Technical Field**

The present application relates to the field of network information interaction technologies, and in particular, to an information interaction method, apparatus, and system.

**Background Art**

With the constant development of network science and technology, safe and convenient network payment modes have been continuously popularized. People can already process, by using a terminal device in a network connected state, data information online in real time through a network data processing technology, thereby achieving payment.

However, a terminal device that cannot be connected to a network, for example, a wearable device (such as a smart watch), cannot perform communication interaction with a payment server terminal, and a user is unable to perform information interaction through the terminal device to achieve payment. Alternatively, when in an offline state, a terminal device that can be connected to a network (such as a mobile phone) cannot communicate with the payment server terminal online, and a user is also unable to perform information interaction through such an offline terminal device to achieve payment. To sum up, in either of the above situations, the user is unable to perform information interaction through such an offline terminal device to achieve payment.

GB 2 478 712 A discloses an authorization system that includes a transaction processing terminal for processing transactions; and a mobile user device, the user device comprising means for receiving information relating to a particular transaction from the processing terminal, and means for generating a user code to authorize a transaction in dependence upon the received information, wherein the user code is adapted to be received by the processing terminal thereby to enable the processing terminal to process the transaction.

US 2013/282589 A1 discloses a method for transaction authentication where different types of information including user information, device information, and network information are processed with a unique algorithm and encrypted for security purposes. The processed and encrypted information is then used as components of a multi-factor authentication process. During an authentication transaction, these unique identifiers are used along with real-time personal identification methods including, but not limited to, biometrics and/or a personal identification number to complete the authentication process between two devices.

US 2013/238503 A1 discloses a system and method for managing information for performing secure transactions. In the secure electronic transaction method, a unique code associated with a payer and payer's selected transaction method is generated, responsive to a request from the payer computing platform to conduct a transaction using that transaction method. A unique code received from a recipient is validated by attempting to match it with a stored unique code associated with a payer and payer's selected transaction method.

**Summary of the Invention**

The invention is defined by the appended claims. An objective of the present application is to provide an information interaction method, apparatus, and system, so that safe and convenient payment can still be achieved when a terminal device is in an offline state.

**Brief Description of the Drawings**

To describe the technical solutions in the embodiments of the present invention more clearly, the following briefly introduces the accompanying drawings required for describing the embodiments. Apparently, the accompanying drawings in the following description show merely some embodiments of the present application, and a person of ordinary skill in the art can still derive other drawings from these accompanying drawings without creative efforts.

FIG. 1 is a schematic structural diagram of an information interaction system according to an embodiment of the present application;

FIG. 2 is a schematic structural diagram of another information interaction system according to an embodiment of the present application;

FIG. 3a is a flowchart of an information interaction method on a terminal side according to an embodiment of the present application;

FIG. 3b is a method flowchart of the terminal side during offline payment according to an embodiment of the present application;

FIG. 4 is a flowchart of an information interaction method on a second server terminal side according to an embodiment of the present application;

FIG. 5a is a flowchart of an information interaction method on a first server terminal side according to an embodiment of the present application;

FIG. 5b is a method flowchart of the first server terminal side during offline payment authorization according to an embodiment of the present application;

FIG. 5c is a method flowchart of another first server terminal side during offline payment authorization according to an embodiment of the present application;

FIG. 6 is an interaction diagram of an information interaction method according to an embodiment of the present application;

FIG. 7 is an interaction diagram during a (mobile phone) offline payment authorization according to an embodiment of the present application;

FIG. 8 is an interaction diagram during another (smart watch) offline payment authorization according to an embodiment of the present application;

FIG. 9 is a schematic structural diagram of a terminal according to an embodiment of the present application;

FIG. 10 is a schematic structural diagram of a second server terminal according to an embodiment of the present application;

FIG. 11 is a schematic structural diagram of a first server terminal according to an embodiment of the present application; and

FIG. 12 is a schematic structural diagram of composition of an electronic device according to an embodiment of the present application.

**Detailed Description**

To make the objectives, features, and advantages of the present application more apparent and comprehensible, the technical solutions in the embodiments of the present application will be described below with reference to the drawings in the embodiments of the present application.

The information interaction method and apparatus provided in the embodiments of the present application are applicable to all types of intelligent mobile terminal devices, for example, a smart mobile phone, a tablet computer, and other terminal devices, particularly applicable to smart wearable devices that do not have a network connection function, for example, a smart watch, a smart bracelet, and other devices.

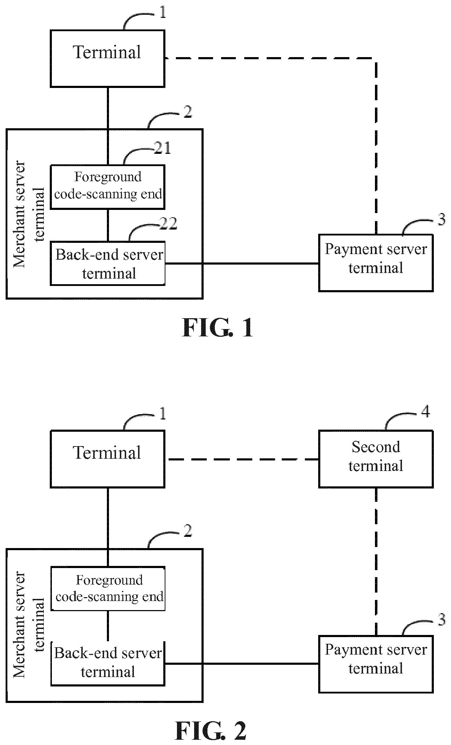

FIG. 1 is a schematic structural diagram of an information interaction system according to an embodiment of the present application. In FIG. 1, a terminal 1, a merchant server terminal 2 (a second server terminal), and a payment server terminal 3 (a first server terminal) are shown. The terminal 1 in the figure is a terminal having a network connection function, for example, a smart mobile phone, a tablet computer or the like, and the terminal 1 may have a network connection with the payment server terminal 3. The dashed line in the figure indicates that, in the scenario of actual use, the terminal 1 fails to establish a network connection to the payment server terminal 3. When in an online state, the terminal 1 may establish a network connection to the payment server terminal 3, and the terminal 1 requests the payment server terminal 3 to perform offline payment authorization. After authorization verification, the payment server terminal 3 issues an authentication factor to the terminal 1. In the scenario of actual use, the terminal 1 is in an offline state, and displays, on the screen, a graphical identifier which carries payment authentication information and is generated according to the authentication factor issued by the payment server terminal 3. The merchant server terminal 2 acquires payment authentication information by scanning the graphical identifier, and generates a payment request from the payment authentication information and order information and sends the payment request to the payment server terminal 3. The payment server terminal 3 verifies the payment authentication information, and when the verification is successful, the payment server terminal 3 performs payment.

Wherein, the merchant server terminal 2 includes a foreground code-scanning end 21 and a back-end server terminal 22. The foreground code-scanning end 21 is mainly installed with a code scanning gun, which scans the graphical identifier displayed on the terminal 1, and transmits the graphical identifier to the back-end server terminal 22. The back-end server terminal 22 mainly checks parameters of the foreground code-scanning end 21, and extracts to obtain the payment authentication information in the graphical identifier. After preprocessing order parameters of a merchant, the back-end server terminal 22 submits an order creation and payment request to the payment server terminal 3.

FIG. 2 is a schematic structural diagram of another information interaction system according to an embodiment of the present application. Difference with FIG. 1 lies in that, the terminal 1 in FIG. 2 is a terminal having no network connection function, for example, a smart watch, a smart bracelet, and other wearable devices; the terminal 1 cannot establish a network connection to the payment server terminal 3, but the terminal 1 can establish a connection to a second terminal 4 having the network connection function through other communication modules (such as Bluetooth), and acquire, through the second terminal 4, the authentication factor issued by the payment server terminal 3. The dashed line in the figure indicates that after the offline payment authorization, in the scenario of actual use, the second terminal 4 having the network connection function may not be necessary. Hereinafter, a specific information interaction process is introduced.

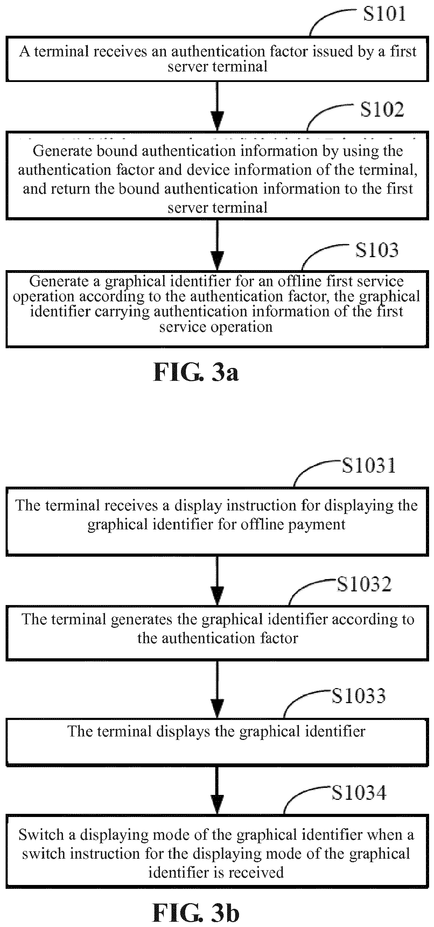

FIG. 3a is a flowchart of an information interaction method on a terminal side according to an embodiment of the present application. As shown in FIG. 3a, the information interaction method of the embodiment of the present application includes:

S101. A terminal receives an authentication factor issued by a first server terminal.

The authentication factor carries an authentication key and account information of a user, and a dynamic time factor.

Wherein, a first service operation includes network exchange operations for virtual resources, such as payment amount and voucher write-off.

The first server terminal is a server terminal that completes the first service operation after authenticating the terminal when the terminal requests the first service operation.

For illustration purposes, the present application takes payment as an example of the first service operation, offline payment as an example of the offline first service operation, a payment request as an example of the first service operation request, a payment server terminal as an example of the first server terminal, and a merchant server terminal as an example of the second server terminal for illustration, and network exchange operations for other virtual resources are similar to the above.

When in an online state, the terminal establishes a network connection to the first server terminal, and requests offline payment authentication from the first server terminal. The first server terminal issues the authentication factor to the terminal after the authentication verification is successful.

The following steps are included: sending, by the terminal, an account identity verification request to the first server terminal; receiving a verification result sent by the first server terminal after identity verification is successful; sending a verification request for offline payment authorization to the first server terminal; and receiving the authentication factor issued by the first server terminal after authorization verification is successful.

S102. Bound authentication information is generated by using the authentication factor and device information of the terminal, and the bound authentication information is returned to the first server terminal, such that the first server terminal performs authorization through the first service operation according to the bound authentication information.

In order to achieve safe and convenient payment in an offline state, the terminal, when in an online state, needs to request the first server terminal to perform authentication verification on binding of the device information and the authentication factor issued by the first server terminal, to be authorized during offline payment.

S103. A graphical identifier for completing the first service operation offline is generated according to the authentication factor, the graphical identifier carrying authentication information of the first service operation.

The authentication information of the first service operation, i.e., payment authentication information, includes the authentication key of the user, device account information, and a dynamic password, the dynamic password is generated according to the dynamic time factor, and the device account information is generated according to the account information of the user and the device information of the terminal. The graphical identifier is a QR code or a bar code.

Wherein, the dynamic password remains unchanged in a same time window, and in a next time window, the dynamic password is regenerated according to the dynamic time factor, to change dynamically. This can ensure the safety of the payment authentication information, thereby achieving the purpose of anti-counterfeiting.

The dynamic password is specifically obtained through calculation by using the authentication key of the user, the dynamic time factor, the device account information, and a preset password length according to a one-time password calculating method.

If the displaying mode of the graphical identification is a QR code, it may carry a large amount of information, thereby increasing the preset password length of the one-time password, and enhancing the safety.

A terminal in an offline state, when needing to perform payment, generates a graphical identifier for offline payment, which is scanned by a merchant end to acquire payment authentication information carried in the graphical identifier, to complete offline payment through the second server terminal.

Specifically, as shown in FIG. 3b, S103 may include the following steps:

S1031. A display instruction for displaying the graphical identifier for offline payment is received.

S1032. The graphical identifier for offline payment is generated according to the authentication factor.

S1033. The terminal displays the graphical identifier, so as to perform payment in an offline state by using the graphical identifier.

The displaying mode of the graphical identifier includes one or a combination of: a bar code and a QR code.

Optionally, after the terminal displays the graphical identifier, the method further includes: S1034, in which the displaying mode of the graphical identifier is switched when a switch instruction for the displaying mode of the graphical identifier is received.

When the switch instruction for the displaying mode of the graphical identifier is received, if the current displaying mode of the graphical identifier is a QR code, the displaying mode is switched to a bar code; on the contrary, if the current displaying mode of the graphical identifier is a bar code, the displaying mode is switched to a QR code.

A terminal (such as a smart watch) that cannot directly establish a network connection to the first server terminal may receive, through a second terminal (such as a smart mobile phone) that can establish a network connection to the first server terminal, the authentication factor issued by the first server terminal; and return the bound authentication information to the first server terminal through the second terminal.

The following steps are specifically included: sending, by a second terminal in an online state, an account identity verification request to the first server terminal; receiving, by the second terminal, a verification result sent by the first server terminal after identity verification is successful; sending, by the second terminal in an online state, a verification request for offline payment authorization to the first server terminal; and receiving, by the second terminal, an authentication factor issued by the first server terminal after authorization verification is successful.

After acquiring the authentication factor, the second terminal sends the authentication factor to the terminal. Likewise, after acquiring the authentication factor, the terminal binds it with the device information of the terminal, and sends bound authentication information through the second terminal, such that the first server terminal performs authorization through the payment of the terminal according to the bound authentication information, thereby achieving the offline payment of the terminal.

Specifically, a management program of the terminal is installed on the second terminal. For example, a management application (management APP) of a smart watch is installed on a smart mobile phone, the APP in the mobile phone integrates login, payment authentication, and other functions of the mobile phone, such as payment account login check, and through the APP, the mobile phone can achieve functions such as Bluetooth communication with the watch, sending authentication parameters (the authentication factor) to the watch, and processing safe communication with the first server terminal and the watch. The watch completes safe communication with the mobile phone, stores and updates a generation parameter of payment authentication information, further generates payment authentication information according to the generation parameter of the payment authentication information, and displays the payment authentication information in the form of a QR code or a bar code.

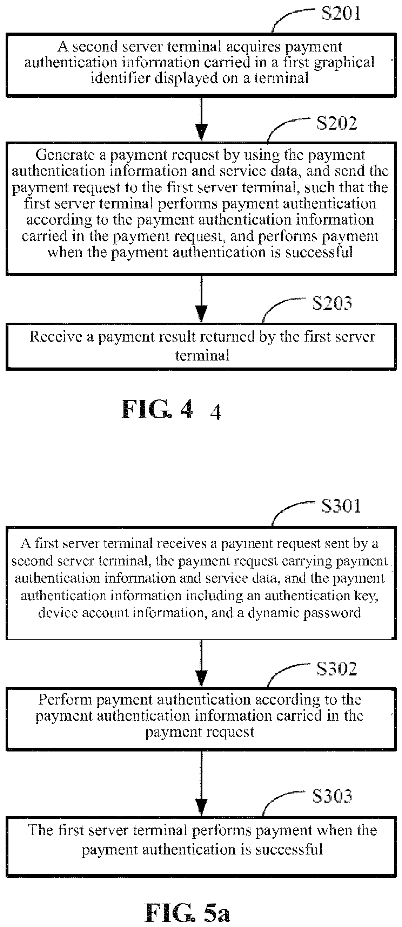

FIG. 4 is a flowchart of an information interaction method on a second server terminal side according to an embodiment of the present application. As shown in FIG. 4, the information interaction method of the embodiment of the present application includes:

S201. A second server terminal acquires payment authentication information carried in a graphical identifier displayed on a terminal.

The payment authentication information includes an authentication key, device account information, and a dynamic password.

The second server terminal includes a foreground code-scanning end and a back-end server terminal. The foreground code-scanning end is mainly installed with a code scanning gun, which scans the graphical identifier displayed in the form of a QR code or a bar code on the terminal, and transmits the graphical identifier to the back-end server terminal. The back-end server terminal mainly checks parameters of the foreground code-scanning end, and extracts to obtain payment authentication information in the graphical identifier.

S202. A payment request is generated by using the payment authentication information and service data, and sent to the first server terminal, such that the first server terminal performs payment authentication according to the payment authentication information carried in the payment request, and performs payment when the payment authentication is successful.

The back-end server terminal of the second server terminal preprocesses the service data

(order parameters of a merchant), generates an order and a payment request from the payment authentication information and the service data, and sends the order and the payment request to the first server terminal.

S203. A payment result returned by the first server terminal is received.

After the first server terminal completes payment authentication verification and performs payment, the second server terminal receives a payment result returned by the first server terminal.

FIG. 5a is a flowchart of an information interaction method on a first server terminal side according to an embodiment of the present application. As shown in FIG. 5a, the information interaction method of the embodiment of the present application includes:

S301. A first server terminal receives a payment request sent by a second server terminal, the payment request carrying payment authentication information and service data.

The payment authentication information includes an authentication key, device account information, and a dynamic password.

When a terminal is in an offline state, the first server terminal receives the payment request sent by the second server terminal, the request carrying payment authentication information of the terminal.

S302. Payment authentication is performed according to the payment authentication information carried in the payment request, and the first server terminal performs payment when the payment authentication is successful.

Specifically, the step of performing payment authentication according to the payment authentication information carried in the payment request specifically includes: checking whether a binding relationship between the device account information and the authentication key that are carried in the payment authentication information is correct, and checking whether the dynamic password is valid according to the dynamic time factor in the authentication factor; and if yes, the payment authentication is successful.

Before S301 of receiving a payment request sent by a second server terminal, the method further includes: performing, by the first server terminal, online account binding on the terminal.

When in an online state, the terminal first needs to perform online account binding with the first server terminal.

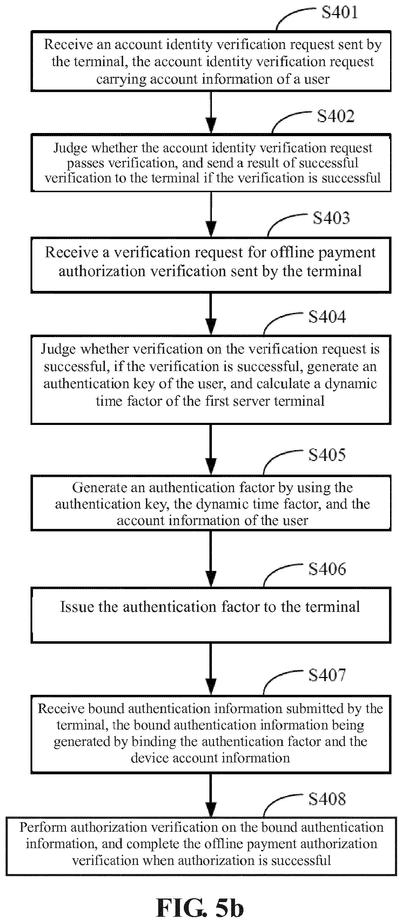

As shown in FIG. 5b, the step of performing, by the first server terminal, online account binding on the terminal specifically includes:

S401. The first server terminal receives an account identity verification request sent by the terminal.

The account identity verification request carries account information of a user.

S402. It is judged whether the account identity verification request passes verification, and a result of successful verification is sent to the terminal if the verification is successful.

S403. A verification request for offline payment authorization verification sent by the terminal is received.

S404. It is judged whether verification on the verification request is successful, if the verification is successful, an authentication key of the user is generated, and a dynamic time factor of the first server terminal is calculated.

S405. An authentication factor is generated by using the authentication key, the dynamic time factor, and the account information of the user.

S406. The authentication factor is issued to the terminal.

S407. Bound authentication information submitted by the terminal is received, the bound authentication information being generated by binding the authentication factor and the device account information.

S408. Authorization verification is performed on the bound authentication information, and the offline payment authorization verification is completed when authorization is successful.

Optionally, after S404 of generating an authentication key of the user, the method further includes: generating a compressed string from the authentication key and the account information of the user, the compressed string having a one-to-one mapping relationship with the authentication key and the account information of the user. In this way, storage space can be saved, thus avoiding the problem that excessively long identification information of the device account cannot be displayed in a limited password length. When the payment authentication information is received, the one-to-one corresponding authentication key and account information of the user can also be found through the compressed string.

In S405, the authentication factor is generated by using the authentication key, the compressed string, and the dynamic time factor. Specifically, if SN represents the authentication factor, key represents the authentication key of the user, Seq represents the compressed string of the device account information, UserId represents the account identification information, Did represents device identification information, timestamp represents the dynamic time factor, N represents a preset password length, Zip represents the one-to-one mapping relationship, OTP represents the dynamic password, and Tag represents an authentication information tag, the authentication factor may be obtained by using the following equations:

$$Seq = Zip\ (UserId, Did)$$

$$OTP = HOTP\ (Key, Tag + Seq + timestamp, N)$$

$$SN = Tag + Seq + OTP$$

It can be seen that, through Seq = Zip(UserId, Did), the device identification information and the account identification information are first compressed into the compressed string Seq of the device account information, the dynamic password OTP is then obtained through calculation according to a Hash Message Authentication Code (HMAC) based One-Time Password (HOTP) algorithm, and the authentication factor SN is obtained through a combination of the authentication information tag Tag, the compressed string Seq, and the dynamic password OTP.

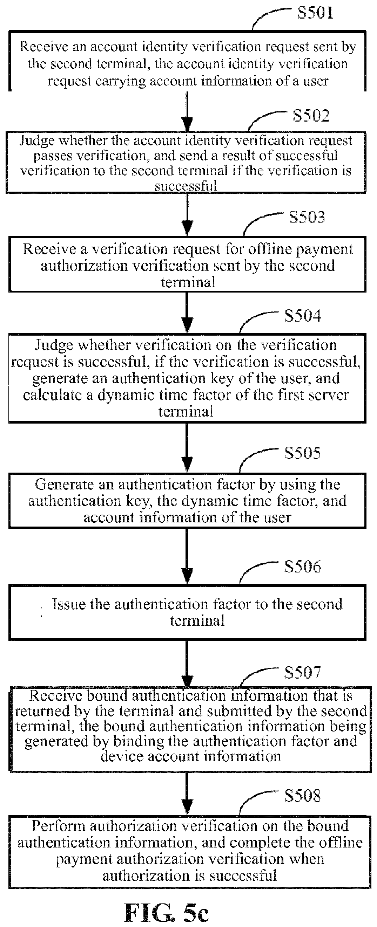

A terminal that cannot directly establish a network connection to the first server terminal performs online account binding through a second terminal that can establish a network connection to the first server terminal. As shown in FIG. 5c, the step of performing, by the first server terminal, online account binding on the terminal, which is similar to FIG. 5b, specifically includes:

S501. The first server terminal receives an account identity verification request sent by the second terminal.

The account identity verification request carries account information of a user.

S502. It is judged whether the account identity verification request passes verification, and a result of successful verification is sent to the second terminal if the verification is successful.

S503. A verification request for offline payment authorization verification sent by the second terminal is received.

S504. It is judged whether verification on the verification request is successful, if the verification is successful, an authentication key of the user is generated, and a dynamic time factor of the first server terminal is calculated.

S505. An authentication factor is generated by using the authentication key, the dynamic time factor, and the account information of the user.

S506. The authentication factor is issued to the second terminal.

S507. Bound authentication information that is returned by the terminal and submitted by the second terminal is received, the bound authentication information being generated by binding the authentication factor and device account information.

S508. Authorization verification is performed on the bound authentication information, and the offline payment authorization verification is completed when authorization is successful.

After receiving a result of successful authorization of the first server terminal, the second terminal sends the result to the terminal.

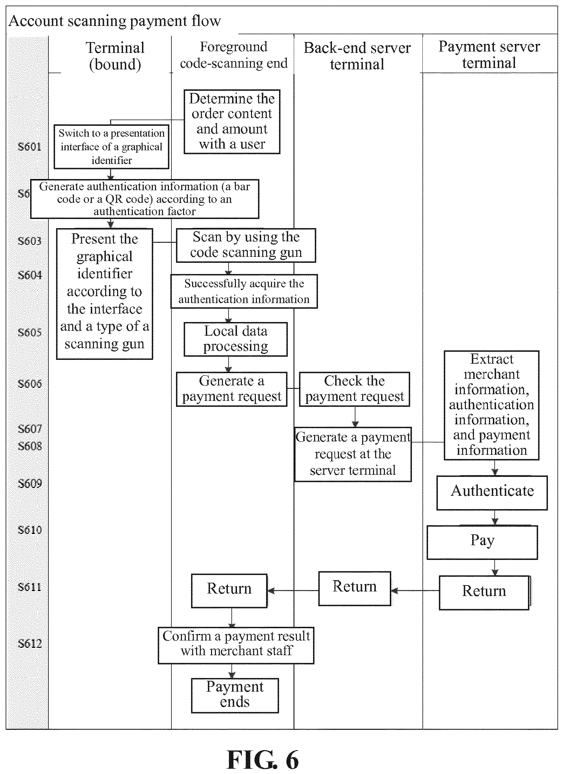

FIG. 6 is an interaction diagram of an information interaction method according to an embodiment of the present application; as shown in FIG. 6, the method includes:

S601. A terminal receives a display instruction for displaying a graphical identifier, and switches to a presentation interface of the graphical identifier.

After a user determines the content and amount of an order with a merchant, the user operates the terminal to display the graphical identifier for offline payment. The terminal receives the display instruction of the user, and switches to the presentation interface of the graphical identifier.

S602. The terminal generates payment authentication information according to an authentication factor.

The payment authentication information may be payment authentication information presented in the form of a QR code, and may also be payment authentication information presented in the form of a bar code.

S603. The terminal presents the graphical identifier according to the interface and a type of a code scanning gun, for the use of code scanning.

The terminal, under an operation instruction of the user, presents the graphical identifier according to a required presentation mode.

S604. A foreground code-scanning end of a second server terminal acquires the payment authentication information.

S605. The foreground code-scanning end performs local data processing on order information.

S606. The foreground code-scanning end generates a payment request of the foreground code-scanning end from the order information and the payment authentication information and sends the payment request to a back-end server terminal of the second server terminal, such that the back-end server terminal checks the payment request of the foreground code-scanning end.

S607. The back-end server terminal extracts the payment authentication information and order service information, generates a payment request, and sends the payment request to the first server terminal.

S608. The first server terminal extracts, from the payment request, the payment authentication information and merchant information in the order service information.

S609. The first server terminal authenticates the payment authentication information.

S610. The first server terminal performs payment when the authentication is successful.

S611. The first server terminal returns a payment result to the second server terminal.

S612. Merchant staff confirms the payment result.

In this way, the user completes the payment, and the merchant delivers a commodity.

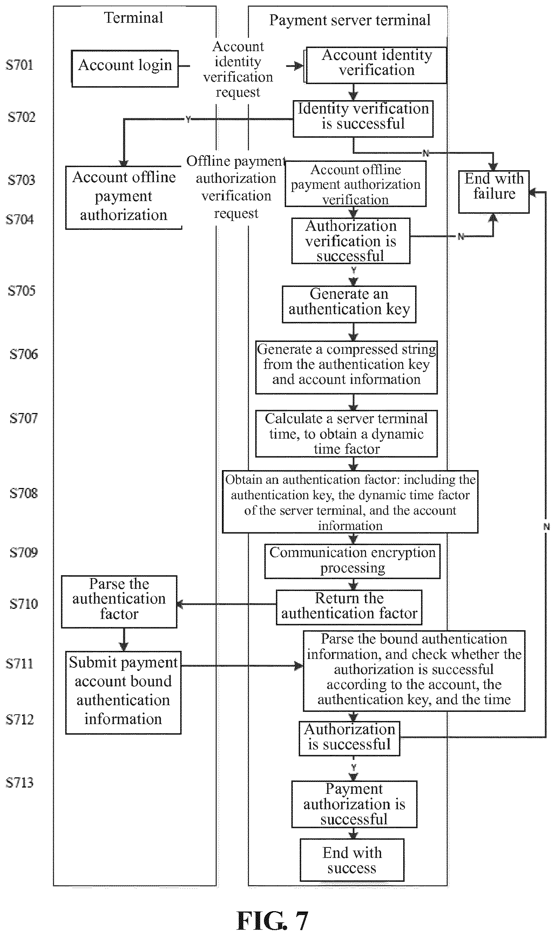

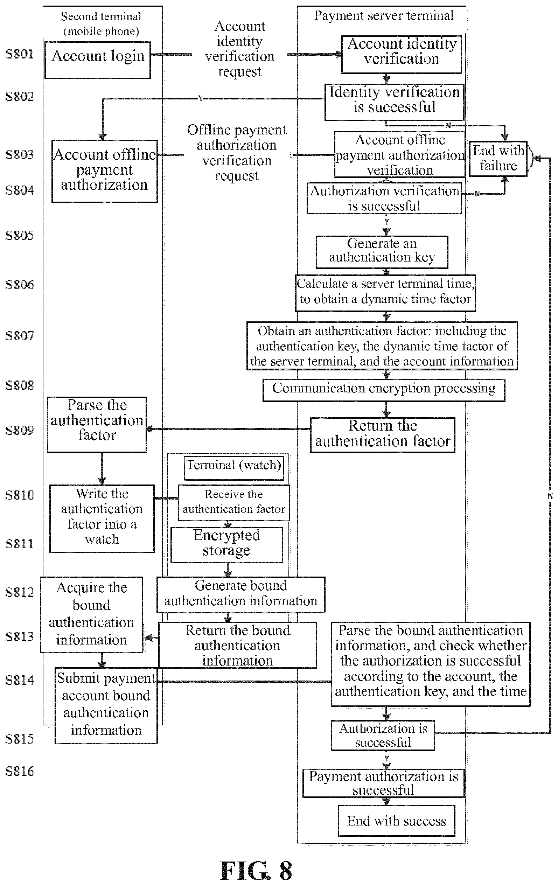

The terminal in FIG. 6 is a terminal on which online account binding has been performed. Hereinafter, an interaction process during online account binding is introduced through FIG. 7 and FIG. 8. Wherein, the terminal in FIG. 7 is a terminal that can directly establish a connection to the first server terminal, and the terminal in FIG. 8 is a terminal that cannot directly establish a connection to the first server terminal. In order to give a more detailed illustration on the solution, the terminal in FIG. 7 is a mobile phone, the terminal in FIG. 8 is a watch, and the second terminal is a mobile phone.

FIG. 7 is an interaction diagram during a (mobile phone) offline payment authorization according to an embodiment of the present application; as shown in FIG. 7, the following steps are included:

S701. A terminal, when in an online state, sends an account identity verification request to a first server terminal.

The account identity verification request carries account information of a user.

S702. The first server terminal judges whether the account identity verification request passes verification, and a result of successful verification is sent to the terminal if the verification is successful; otherwise, the process ends with failure.

S703. The terminal sends a verification request for offline payment authorization to the first server terminal.

S704. The first server terminal judges whether verification on the verification request is successful, and the process proceeds to S705 if the verification is successful; otherwise, the process ends with failure.

S705. The first server terminal generates an authentication key of the user.

S706. The first server terminal generates a compressed string from the authentication key and the account information.

S707. The first server terminal calculates a dynamic time factor of the first server terminal.

S708. The first server terminal generates an authentication factor by using the authentication key, the dynamic time factor, and the account information of the user.

S709. The first server terminal performs communication encryption processing on the authentication factor.

S710. The first server terminal returns the authentication factor to the terminal.

S711. The terminal generates bound authentication information by using the authentication factor and device information of the terminal after receiving the authentication factor that is sent by the first server terminal after the authorization verification is successful, and submits the bound authentication information to the first server terminal.

S712. The first server terminal parses the bound authentication information, and checks whether the authorization is successful according to the account, the authentication key, and the dynamic time factor, and if yes, the process proceeds to S713; otherwise, the process ends with failure.

S713. The first server terminal performs payment when the payment authorization is successful.

FIG. 8 is an interaction diagram during another (smart watch) offline payment authorization according to an embodiment of the present application; as shown in FIG. 8, the following steps are included:

S801. A second terminal, when in an online state, sends an account identity verification request to a first server terminal.

The account identity verification request carries account information of a user.

S802. The first server terminal judges whether the account identity verification request passes verification, and a result of successful verification is sent to the second terminal if the verification is successful; otherwise, the process ends with failure.

S803. The second terminal sends a verification request for offline payment authorization to the first server terminal.

S804. The first server terminal judges whether verification on the verification request is successful, and the process proceeds to S805 if the verification is successful; otherwise, the process ends with failure.

S805. The first server terminal generates an authentication key of the user.

S806. The first server terminal calculates a dynamic time factor of the first server terminal.

S807. The first server terminal generates an authentication factor by using the authentication key, the dynamic time factor, and the account information of the user.

S808. The first server terminal performs communication encryption processing on the authentication factor.

S809. The first server terminal returns the authentication factor to the second terminal, and the second terminal parses to obtain the authentication factor.

S810. The second terminal writes the authentication factor into a terminal (watch), and the terminal receives the authentication factor.

S811. The terminal stores the authentication factor in an encrypted manner.

S812. The terminal generates bound authentication information by using the authentication factor and device information of the terminal.

S813. The terminal sends the bound authentication information to the second terminal.

S814. The second terminal submits the bound authentication information of a payment account to the first server terminal.

S815. The first server terminal parses the bound authentication information, and checks whether the authorization is successful according to the account, the authentication key, and the dynamic time factor, and if yes, the process proceeds to S816; otherwise, the process ends with failure.

S816. The first server terminal performs payment when the payment authorization is successful.

In the information interaction method provided in the embodiments of the present application, a dynamic graphical identifier for offline payment is generated through bound payment authentication information and dynamic time factor, such that a terminal device in an offline state can also perform safe payment by using the graphical identifier, thereby achieving safe and convenient payment. In the present application, since the graphical identifier (a bar code/a QR code) carries information about an account, a device, a dynamic time factor timestamp, and an authentication key, a first server terminal may check the validity of a One-Time Password according to a binding relationship among the account, the device, and the authentication key, as well as a HOTP signature result, to determine whether to complete the payment check, thereby achieving safe and convenient offline payment.

Hereinabove is a detailed description on the information interaction method provided in the embodiments of the present application, the information interaction apparatus provided by the present application will be described in detail below.

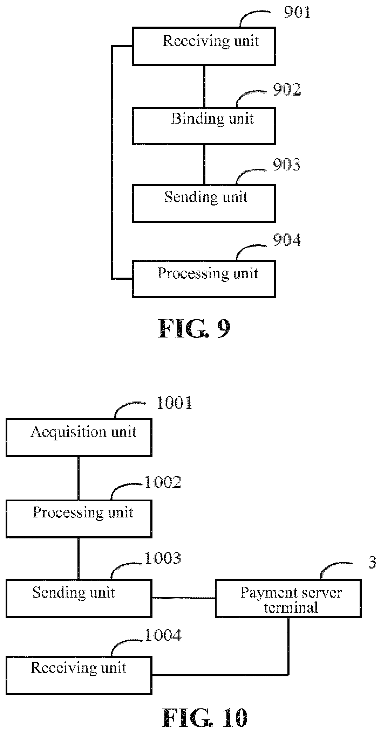

FIG. 9 is a schematic structural diagram of a terminal according to an embodiment of the present application; as shown in FIG. 9, the terminal in the present application includes: a receiving unit 901, a binding unit 902, a sending unit 903, and a processing unit 904.

The receiving unit 901 is configured to receive an authentication factor issued by a first server terminal.

The authentication factor carries an authentication key and account information of a user, and a dynamic time factor.

The binding unit 902 is configured to generate bound authentication information by using the authentication factor received by the receiving unit 901 and device information of the terminal.

The sending unit 903 is configured to return the bound authentication information generated by the binding unit 902 to the first server terminal, such that the first server terminal performs authorization through payment according to the bound authentication information.

The processing unit 904 is configured to generate a graphical identifier for offline payment according to the authentication factor received by the receiving unit 901, the graphical identifier carrying payment authentication information.

The payment authentication information includes the authentication key of the user, device account information, and a dynamic password, the dynamic password being generated according to the dynamic time factor, and the device account information being generated according to the account information of the user and the device information of the terminal.

Before the processing unit 904 generates the graphical identifier, the receiving unit 901 is further configured to receive a display instruction for displaying the graphical identifier. The processing unit 904, after the receiving unit 901 receives the display instruction, is configured to generate the graphical identifier for offline payment according to the authentication factor.

The terminal further includes: a displaying unit (not shown) configured to display the graphical identifier generated by the processing unit 904, such that the terminal performs payment in an offline state by using the graphical identifier.

The displaying mode of the graphical identifier displayed by the displaying unit includes one or a combination of: a bar code and a QR code.

The receiving unit 901 is further configured to receive a switch instruction for the displaying mode of the graphical identifier, and the processing unit 904 is configured to switch the displaying mode of the graphical identifier displayed by the displaying unit when the receiving unit 901 receives the switch instruction.

Optionally, the receiving unit 901 is configured to receive, through a second terminal, the authentication factor issued by the first server terminal; and the sending unit 903 is configured to return the bound authentication information to the first server terminal through the second terminal.

The sending unit 903 is further configured to send an account identity verification request to the first server terminal; the receiving unit 901 is configured to receive payment authorization sent by the first server terminal after identity verification is successful; the sending unit 903 is configured to send a verification request for offline payment authorization to the first server terminal; and the receiving unit 901 is configured to receive the authentication factor issued by the first server terminal after authorization verification is successful.

The functions of the above units may be corresponding to the processing steps of the above information interaction method described in FIGs. 3a-3b in detail. Details are not described herein again.

FIG. 10 is a schematic structural diagram of a server terminal according to an embodiment of the present application; as shown in FIG. 10, the server terminal includes: an acquisition unit 1001, a processing unit 1002, a sending unit 1003, and a receiving unit 1004.

The acquisition unit 1001 is configured to acquire payment authentication information carried in a graphical identifier displayed on a terminal.

The payment authentication information includes an authentication key, device account information, and a dynamic password.

The processing unit 1002 is configured to generate a payment request by using the payment authentication information acquired by the acquisition unit 1001 and service data.

The sending unit 1003 is configured to send the payment request generated by the processing unit 1002 to the first server terminal, such that the first server terminal performs payment authentication according to the payment authentication information carried in the payment request, and performs payment when the payment authentication is successful.

The receiving unit 1004 is configured to receive a payment result returned by the first server terminal 3.

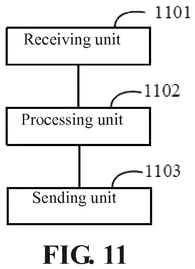

FIG. 11 is a schematic structural diagram of a server terminal according to an embodiment of the present application; as shown in FIG. 11, the server terminal includes: a receiving unit 1101, a processing unit 1102, and a sending unit 1103.

The receiving unit 1101 is configured to receive a payment request sent by a second server terminal, the payment request carrying payment authentication information and service data.

The payment authentication information includes an authentication key, device account information, and a dynamic password.

The processing unit 1102 is configured to perform payment authentication according to the payment authentication information carried in the payment request received by the receiving unit 1101, and the server terminal performs payment when the payment authentication is successful.

The processing unit 1102 is further configured to perform account binding on the terminal.

First situation:

The receiving unit 1101 is configured to receive an account identity verification request sent by the terminal, the account identity verification request carrying account information of the user.

The processing unit 1102 is configured to judge whether the account identity verification request passes verification, and use the sending unit 1103 to send a result of successful verification to the terminal if the verification is successful.

The receiving unit 1101 is configured to receive a verification request for offline payment authorization verification sent by the terminal.

The processing unit 1102 is configured to judge whether verification on the verification request is successful, if the verification is successful, generate an authentication key of the user, and calculate a dynamic time factor of the server terminal; and generate an authentication factor by using the authentication key, the dynamic time factor, and the account information of the user.

The sending unit 1103 is configured to issue the authentication factor generated by the processing unit 1102 to the terminal.

The receiving unit 1101 is configured to receive bound authentication information submitted by the terminal, the bound authentication information being generated by binding the authentication factor and the device account information.

The processing unit 1102 is configured to perform authorization verification on the bound authentication information, and complete the offline payment authorization verification when authorization is successful.

Second situation:

The receiving unit 1101 is configured to receive an account identity verification request sent by the second terminal, the account identity verification request carrying account information of the user.

The processing unit 1102 is configured to judge whether the account identity verification request passes verification, and use the sending unit 1103 to send a result of successful verification to the second terminal if the verification is successful.

The receiving unit 1101 is configured to receive a verification request for offline payment authorization verification sent by the second terminal.

The processing unit 1102 is configured to judge whether verification on the verification request is successful, if the verification is successful, generate an authentication key of the user, and calculate a dynamic time factor of the server terminal; and generate an authentication factor by using the authentication key, the dynamic time factor, and the account information of the user.

The sending unit 1103 is configured to issue the authentication factor to the second terminal, such that the second terminal sends the authentication factor to the terminal.

The receiving unit 1101 is configured to receive bound authentication information that is returned by the terminal and submitted by the second terminal, the bound authentication information being generated by the terminal through binding the authentication factor and device account information.

The processing unit 1102 is configured to perform authorization verification on the bound authentication information, and complete the offline payment authorization verification when authorization is successful.

Optionally, after generating the authentication key of the user, the processing unit 1102 is further configured to generate a compressed string from the authentication key and the account information of the user, the compressed string having a one-to-one mapping relationship with the authentication key and the account information of the user.

The processing unit 1102 is configured to generate the authentication factor by using the authentication key, the dynamic time factor, and the account information of the user, which specifically includes: generating the authentication factor by using the authentication key, the compressed string, and the dynamic time factor.

The processing unit 1102 is specifically configured to check whether a binding relationship between the device account information and the authentication key that are carried in the payment authentication information is correct, and check whether the dynamic password is valid according to the dynamic time factor in the authentication factor; and if yes, the payment authentication is successful.

The functions of the above units may be corresponding to the processing steps of the above information interaction method described in FIGs. 5a-5c in detail. Details are not described herein again.

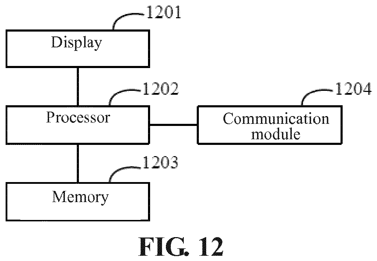

FIG. 12 is a schematic structural diagram of composition of an electronic device according to an embodiment of the present application; as shown in FIG. 12, the electronic device includes: a display 1201, a processor 1202, a memory 1203, and a communication module 1204.

The memory 1203 is configured to store an authentication factor issued by a first server terminal and a program of generating a graphical identifier for offline payment according to the authentication factor, and when the program is executed by the processor, the graphical identifier for offline payment is displayed in a display area of the display. The graphical identifier carries payment authentication information, the payment authentication information including an authentication key of the user, device account information, and a dynamic password, the dynamic password is generated according to the dynamic time factor, and the device account information is generated according to account information of the user and device information of the terminal.

The communication module 1204, in communication with a second electronic device, is configured to receive the authentication factor that is issued by the first server terminal and sent by the second electronic device; and during binding authentication, send bound authentication information to the second electronic device, such that the bound authentication information is forwarded to the first server terminal.

The communication module 1204 is a Bluetooth module or a WiFi module.

Optionally, the dynamic password remains unchanged in a same time window, and in a next time window, the dynamic password is regenerated according to the dynamic time factor, to change dynamically.

Optionally, the dynamic password is specifically obtained through calculation by using the authentication key of the user, the dynamic time factor, the device account information, and a preset password length according to a one-time password calculating method.

Optionally, the device account information is a compressed string obtained by compressing the account information of the user and the device information of the terminal displaying the graphical identifier.

Optionally, the graphical identifier is a QR code or a bar code.

The present application further provides an information interaction system, which includes: a terminal, a first server terminal, and a second server terminal;

the terminal displays, in an offline state, a graphical identifier for completing a first service operation, the graphical identifier carrying authentication information of the first service operation, and the authentication information of the first service operation including an authentication key of a user, device account information, and a dynamic password;
the second server terminal acquires the authentication information of the first service operation carried in the graphical identifier;
the second server terminal generates a first service operation request by using the authentication information of the first service operation and service data, and sends the first service operation request to the first server terminal; and
the first server terminal performs authentication according to the authentication information of the first service operation carried in the first service operation request, and the first server terminal completes the first service operation when the authentication is successful.

Before the terminal displays the graphical identifier for completing the first service operation offline,

the terminal receives a display instruction for displaying the graphical identifier; and
the terminal generates the graphical identifier carrying the authentication information of the first service operation according to the authentication factor issued by the first server terminal.

Before the terminal generates the graphical identifier carrying the authentication information of the first service operation according to the authentication factor issued by the first server terminal,

the terminal, when in an online state, sends an authorization verification request for completing the first service operation offline to the first server terminal;
the first server terminal verifies the authorization verification request, and the first server terminal sends the authentication factor to the terminal after the verification is successful, the authentication factor including an authentication key of a user, account information, and a server terminal time;
the terminal generates a bound authentication code by binding the authentication factor and the device account information, and sends the bound authentication code to the first server terminal; and
the first server terminal performs authorization verification on the bound authentication code, and completes the authorization verification when authorization is successful.

Before the terminal generates the graphical identifier carrying the authentication information of the first service operation according to the authentication factor issued by the first server terminal,

the second terminal in an online state sends an authorization verification request for completing the first service operation offline to the first server terminal;
the first server terminal verifies the authorization verification request, and the first server terminal sends the authentication factor to the second terminal after the verification is successful, the authentication factor including an authentication key of a user, account information, and a server terminal time;
the second terminal sends the authentication factor to the terminal;
the terminal generates a bound authentication code by binding the authentication factor and the device account information, and sends the bound authentication code to the second terminal;
the second terminal submits the bound authentication code to the first server terminal;
the first server terminal performs authorization verification on the bound authentication code, and completes the authorization verification when authorization is successful.

Before the second terminal sends the authorization verification request for completing the first service operation offline to the first server terminal,

the second terminal sends an account identity verification request to the first server terminal, the account identity verification request carrying the account information of the user;
the first server terminal verifies the account identity verification request, and sends a result of successful verification to the second terminal when the verification is successful.

Before the first server terminal sends the authentication factor after the verification is successful,

the first server terminal generates an authentication key of the user after the verification is successful and calculates a dynamic time factor;

the first server terminal generates the authentication factor by using the authentication key, the dynamic time factor, and the account information of the user.

The first server terminal performs authorization verification on the bound authentication code specifically includes:

parsing the bound authentication code to obtain the authentication key, the device account information, and the server terminal time; and

checking whether the authorization verification is successful according to the authentication key, the device account information, and the server terminal time obtained through parsing.

After the first server terminal completes the first service operation,
the first server terminal returns a result of the first service operation to the second server terminal, such that the second server terminal confirms the result of the first service operation.
In the information interaction method, apparatus, and system provided in the embodiments of the present application, a dynamic graphical identifier for offline payment is generated through bound payment authentication information and dynamic time factor, such that a terminal device in an offline state can also perform safe payment by using the graphical identifier, thereby achieving safe and convenient payment.

Professionals should also be aware that units and algorithm steps in examples described with reference to the embodiments disclosed herein can be implemented by electronic hardware, computer software, or a combination thereof. To clearly illustrate the interchangeability between hardware and software, the composition and steps of each example have been described in general according to functions in the foregoing description. Whether these functions are executed by using hardware or software depends on a specific application and design constraint conditions of the technical solution. For each specific application, professionals may use a different method to implement the described functions.

Steps of the method or algorithm described with reference to the embodiments disclosed herein may be implemented by hardware, a software module executed by a processor, or a combination thereof. The software module may be disposed in a random access memory (RAM), a memory, a read-only memory (ROM), an electrically programmable ROM, an electrically erasable programmable ROM, a register, a hard drive, a removable disk, a CD-ROM, or any other form of storage medium commonly known in the technical field.

The foregoing specific implementations provide further detailed descriptions of the objectives, technical solutions, and beneficial effects of the present application. It should be understood that, described above are merely specific implementations of the present application, which are not intended to limit the protection scope of the present application.

## Claims

1. An information interaction method, comprising:

   A) *performing, by a first server terminal (3), online account binding on a mobile device terminal (1), comprising:*

      receiving (S401) an account identity verification request sent by the mobile device terminal (1), wherein the account identity verification request carries account information of a user of the mobile device terminal (1);
      determining (S402) whether the account identity verification request passes verification, and sending a verification result of successful verification to the mobile device terminal (1) if the verification is successful;
      receiving (S403) an authorization verification request, sent by the mobile device terminal (1), for completing the first payment operation offline;
      determining (S404) whether verification on the authorization verification request is successful;
      if the verification is successful, generating an authentication key of the user, and calculating a dynamic time factor of the first server terminal (3);
      generating (S405) an authentication factor by using the authentication key of the user, the dynamic time factor, and the account information of the user;
      issuing (S406) the authentication factor to the mobile device terminal (1);
      receiving (S101), by the mobile device terminal (1), the authentication factor issued by the first server terminal (3), the authentication factor carrying an authentication key of the user of the mobile device terminal (1), the account information of the user, and the dynamic time factor, wherein the first server terminal (3) is a server terminal that completes a payment operation after authenticating the mobile device terminal when the mobile device terminal (1) requests a first payment operation;
      generating (S102), by the mobile device terminal (1), bound authentication information by binding the authentication factor to device information of the mobile device terminal (1), and returning the bound authentication information to the first server terminal (3), such that the first server terminal (3) performs authorization through the first payment operation according to the bound authentication information;
      receiving (S407), by the first server terminal (3), the bound authentication information submitted by the mobile device terminal (1), the bound authentication information being generated by binding the authentication factor and the device account information; and
      performing (S408), by the first server terminal (3), authorization verification on the bound authentication information, and completing the authorization verification after authorization is successful;

   B) *requesting, by the mobile device terminal (1), a first payment operation through a second server terminal (2), when the mobile device terminal (1) is in an offline state, wherein requesting the first payment operation comprises:*

      receiving (S1031) a display instruction for displaying the graphical identifier for completing the first payment operation offline;
      generating (S1032) a graphical identifier for completing the first payment operation offline according to the authentication factor, the graphical identifier carrying authentication information of the first payment operation, the authentication information of the first payment operation comprising the authentication key of the user, device account information, and a dynamic password, the dynamic password being generated according to the dynamic time factor, and the device account information being generated according to the account information of the user and the device information of the mobile device terminal (1);

after generating the graphical identifier for completing the first payment operation offline according to the authentication factor, displaying (S 1033), by the mobile device terminal (1), the graphical identifier, to complete the first payment operation in an offline state by using the graphical identifier;

acquiring (S201), by the second server terminal (2), the authentication information of the first payment operation carried in the graphical identifier displayed on the mobile device terminal (1);

*C) performing an interaction between the second server terminal (2) and the first server terminal (3) to perform the first payment operation, wherein performing of the interaction comprises:*

generating (S202), by the second server terminal (2), a first payment request by using the authentication information of the first payment operation and service data;

sending the first payment request to the first server terminal (3), such that the first server terminal (3) performs authentication according to the authentication information of the first payment operation carried in the first payment request;

receiving (S301), by the first server terminal (3), the first payment request sent by the second server terminal (2);

performing (S302), by the first server terminal (3), authentication according to the authentication information carried in the first payment request, the performing (S302) comprising checking whether a binding relationship between the device account information and the authentication key that are carried in the authentication information of the first payment operation is correct, and checking whether the dynamic password is valid according to the dynamic time factor in the authentication factor, wherein, if yes, the authentication is successful;

completing (S303), by the first server terminal (3), the first payment operation when the authentication is successful; and

receiving (S203), by the second server terminal (2), a result of the first payment operation returned by the first server terminal (3).

2. The method of claim 1, wherein a displaying mode of the graphical identifier comprises one or a combination of: a bar code and a QR code; and

after the step of displaying, by the mobile device terminal (1), the graphical identifier, the method further comprises: switching (S1034) the displaying mode of the graphical identifier when receiving a switch instruction for the displaying mode of the graphical identifier.

3. The method of claim 1, wherein the mobile device terminal (1) receives, through a second terminal (4), the authentication factor issued by the first server terminal (3); and returns the bound authentication information to the first server terminal (3) through the second terminal (4).

4. The method of claim 1, wherein the dynamic password remains unchanged in a same time window, and in a next time window, the dynamic password is regenerated according to the dynamic time factor, to change dynamically.

5. The method of claim 1, wherein the dynamic password is specifically obtained through calculation by using the authentication key of the user, the dynamic time factor, the device account information, and a preset password length according to a one-time password calculating method.

6. The method of claim 3, wherein the step of performing, by the first server terminal (3), the online account binding on the mobile device terminal (1) specifically comprises:

receiving (S501) an account identity verification request sent by the second terminal (4), the account identity verification request carrying the account information of the user;

determining (S502) whether the account identity verification request passes verification, and sending a verification result of successful verification to the second terminal (4) if the verification is successful;

receiving (S503) an authorization verification request, sent by the second terminal (4), for completing the first payment operation offline;

determining (S504) whether verification on the authorization verification request is successful, if the verification is successful, generating the authentication key of the user, and calculating a dynamic time factor of the first server terminal (3);

generating (S505) an authentication factor by using the authentication key of the user, the dynamic time factor, and the account information of the user;

issuing (S506) the authentication factor to the second terminal (4), such that the second terminal (4) sends the authentication factor to the mobile device terminal (1);

receiving (S507) bound authentication information that is returned by the mobile device terminal (1) and submitted by the second terminal (4), the bound authentication information being generated by the mobile device terminal (1) through binding the authentication factor and the device account information of the mobile device terminal (1); and

performing (S508) authorization verification on the bound authentication information, and completing the authorization verification after authorization is successful.

7. The method of claim 6, after the step of generating the authentication key of the user, further comprising:

generating a compressed string from the authentication key of the user and the account information of the user, the compressed string having a one-to-one mapping relationship with the authentication key and the account information of the user; and

generating the authentication factor by using the authentication key of the user, the dynamic time factor, and the account information of the user, which specifically comprises:

generating the authentication factor by using the authentication key of the user, the compressed string, and the dynamic time factor.

8. An apparatus comprising:

a mobile device terminal (1);
a second terminal (4);
a first server terminal (3); and
a second server terminal (2);

wherein the apparatus is configured to perform the method of any one of claims 1 to 7.

**Patentansprüche**

1. Informationsinteraktionsverfahren, das Folgendes umfasst:

*A) Durchführen, durch ein erstes Serverendgerät (3), einer Onlinekontobindung auf einem Mobilvorrichtungsendgerät (1), umfassend:*

Empfangen (S401) einer durch das Mobilvorrichtungsendgerät (1) gesendeten Kontoidentitätsverifizierungsanforderung, wobei die Kontoidentitätsverifizierungsanforderung Kontoinformationen eines Benutzers des Mobilvorrichtungsendgeräts (1) führt;

Bestimmen (S402), ob die Kontoidentitätsverifizierungsanforderung eine Verifizierung besteht, und Senden eines Verifizierungsergebnisses einer erfolgreichen Verifizierung an das Mobilvorrichtungsendgerät (1), falls die Verifizierung erfolgreich ist;

Empfangen (S403) einer durch das Mobilvorrichtungsendgerät (1) gesendeten Autorisierungsverifizierungsanforderung dazu, die erste Zahlungsoperation offline abzuschließen;

Bestimmen (S404), ob eine Verifizierung an der Autorisierungsverifizierungsanforderung erfolgreich ist;

falls die Verifizierung erfolgreich ist, Erzeugen eines Authentifizierungsschlüssels des Benutzers und Berechnen eines dynamischen Zeitfaktors des ersten Serverendgeräts (3);

Erzeugen (S405) eines Authentifizierungsfaktors unter Verwendung des Authentifizierungsschlüssels des Benutzers, des dynamischen Zeitfaktors und der Kontoinformationen des Benutzers;

Ausgeben (S406) des Authentifizierungsfaktors an das Mobilvorrichtungsendgerät (1);

Empfangen (S101), durch das Mobilvorrichtungsendgerät (1), des durch das erste Serverendgerät (3) ausgegebenen Authentifizierungsfaktors, wobei der Authentifizierungsfaktor einen Authentifizierungsschlüssel des Benutzers des Mobilvorrichtungsendgeräts (1), die Kontoinformationen des Benutzers und den dynamischen Zeitfaktor führt, wobei das erste Serverendgerät (3) ein Serverendgerät ist, das eine Zahlungsoperation nach Authentifizierung des Mobilvorrichtungsendgeräts, wenn das Mobilvorrichtungsendgerät (1) eine erste Zahlungsoperation anfordert, abschließt;

Erzeugen (S 102), durch das Mobilvorrichtungsendgerät (1), von Bindungsauthentifizierungsinformationen durch Binden des Authentifizierungsfaktors mit Vorrichtungsinformationen des Mobilvorrichtungsendgeräts (1) und Zurückgeben der Bindungsauthentifizierungsinformationen an das erste Serverendgerät (3), sodass das erste Serverendgerät (3) eine Autorisierung über die erste Zahlungsoperation gemäß den Bindungsauthentifizierungsinformationen durchführt;

Empfangen (S407), durch das erste Serverendgerät (3), der durch das Mobilvorrichtungsendgerät (1) gelieferten Bindungsauthentifizierungsinformationen, wobei die Bindungsauthentifizierungsinformationen durch Binden des Authentifizierungsfaktors und der Vorrichtungskontoinformationen erzeugt werden; und

Durchführen (S408), durch das erste Serverendgerät (3), einer Autorisierungsverifizierung an den Bindungsauthentifizierungsinformationen und Abschließen der Autorisierungsverifizierung nach erfolgreicher Autorisierung;

*B) Anfordern, durch das Mobilvorrichtungsendgerät* (1), *einer ersten Zahlungsoperation über ein zweites Serverendgerät (2), wenn das Mobilvorrichtungsendgerät (1) in einem Offline-Zustand ist, wobei das Anfordern der ersten Zahlungsoperationen Folgendes umfasst:*

Empfangen (S1031) einer Anzeigeanweisung zum Anzeigen der grafischen Kennung, um die erste Zahlungsoperation offline abzuschließen;

Erzeugen (S1032) einer grafischen Kennung, um die erste Zahlungsoperation offline abzuschließen, gemäß dem Authentifizierungsfaktor, wobei die grafische Kennung Authentifizierungsinformationen der ersten Zahlungsoperation führt, wobei die Authentifizierungsinformationen der ersten Zahlungsoperation den Authentifizierungsschlüssel des Benutzers, Vorrichtungskontoinformationen und ein dynamisches Passwort umfassen, wobei das dynamische Passwort gemäß dem dynamischen Zeitfaktor erzeugt wird und die Vorrichtungskontoinformationen gemäß den Kontoinformationen des Benutzers und den Vorrichtungsinformationen des Mobilvorrichtungsendgeräts (1) erzeugt werden;

nach Erzeugen der grafischen Kennung, um die erste Zahlungsoperation offline abzuschließen, gemäß dem Authentifizierungsfaktor, Anzeigen (S1033), durch das Mobilvorrichtungsendgerät (1), der grafischen Kennung, um die erste Zahlungsoperation in einem Offline-Zustand unter Verwendung der grafischen Kennung abzuschließen;

Erfassen (S201), durch das zweite Serverendgerät (2), der Authentifizierungsinformationen der ersten Zahlungsoperation, die in der auf dem Mobilvorrichtungsendgerät (1) angezeigten grafischen Kennung geführt werden;

*C) Durchführen einer Interaktion zwischen dem zweiten Serverendgerät (2) und dem ersten Serverendgerät (3), um die erste Zahlungsoperation durchzuführen, wobei das Durchführen der Interaktion Folgendes umfasst:*

Erzeugen (S202), durch das zweite Serverendgerät (2), einer ersten Zahlungsanforderung unter Verwendung der Authentifizierungsinformationen der ersten Zahlungsoperationen und von Dienstdaten;

Senden der ersten Zahlungsanforderung an das erste Serverendgerät (3), sodass das erste Serverendgerät (3) eine Authentifizierung gemäß den in der ersten Zahlungsanforderung geführten Authentifizierungsinformationen der ersten Zahlungsoperation durchführt;

Empfangen (S301), durch das erste Serverendgerät (3), der durch das zweite Serverendgerät (2) gesendeten ersten Zahlungsanforderung;

Durchführen (S302), durch das erste Serverendgerät (3), einer Authentifizierung gemäß den in der ersten Zahlungsanforderung geführten Authentifizierungsinformationen, wobei das Durchführen (S302) Folgendes umfasst: Prüfen, ob eine Bindungsbeziehung zwischen den Vorrichtungskontoinformationen und dem Authentifizierungsschlüssel, die in den Authentifizierungsinformationen der ersten Zahlungsoperationen geführt werden, korrekt ist, und Prüfen, ob das dynamische Passwort gemäß dem dynamischen Zeitfaktor in dem Authentifizierungsfaktor gültig ist, wobei die Authentifizierung, falls dies zutrifft, erfolgreich ist;

Abschließen (S303), durch das erste Serverendgerät (3), der ersten Zahlungsoperation, wenn die Authentifizierung erfolgreich ist; und

Empfangen (S203), durch das zweite Serverendgerät (2), eines durch das erste Serverendgerät (3) zurückgegebenen Ergebnisses der ersten Zahlungsoperation.

**2.** Verfahren nach Anspruch 1, wobei ein Anzeigemodus der grafischen Kennung einen Barcode und/oder einen QR-Code umfasst; und

das Verfahren nach dem Schritt des Anzeigens, durch das Mobilvorrichtungsendgerät (1), der grafischen Kennung, ferner Folgendes umfasst:
Wechseln (S1034) des Anzeigemodus der grafischen Kennung bei Empfang einer Wechselanweisung für den Anzeigemodus der grafischen Kennung.

3. Verfahren nach Abbruch 1, wobei das Mobilvorrichtungsendgerät (1) über ein zweites Endgerät (4) den durch das erste Serverendgerät (3) gelieferten Authentifizierungsfaktor empfängt; und die Bindungsauthentifizierungsinformationen über das zweite Endgerät (4) an das erste Serverendgerät (3) zurückgibt.

4. Verfahren nach Anspruch 1, wobei das dynamische Passwort in einem selben Zeitfenster unverändert bleibt und das dynamische Passwort in einem nächsten Zeitfenster gemäß dem dynamischen Zeitfaktor neu erzeugt wird, um sich dynamisch zu ändern.

5. Verfahren nach Anspruch 1, wobei das dynamische Passwort insbesondere über eine Berechnung unter Verwendung des Authentifizierungsschlüssels des Benutzers, des dynamischen Zeitfaktors, der Vorrichtungskontoinformationen und einer voreingestellten Passwortlänge gemäß einem Einmalpasswort-Berechnungsverfahren erhalten wird.

6. Verfahren nach Anspruch 3, wobei der Schritt des Durchführens, durch das erste Serverendgerät (3), der Onlinekontobindung an dem Mobilvorrichtungsendgerät (1) insbesondere Folgendes umfasst:

   Empfangen (S501) einer durch das zweite Endgerät (4) gesendeten Kontoidentitätsverifizierungsanforderung, wobei die Kontoidentitätsverifizierungsanforderung die Kontoinformationen des Benutzers führt;
   Bestimmen (S502), ob die Kontoidentitätsverifizierungsanforderung eine Verifizierung besteht, und Senden eines Verifizierungsergebnisses einer erfolgreichen Verifizierung an das zweite Endgerät (4), falls die Verifizierung erfolgreich ist;
   Empfangen (S503) einer durch das zweite Endgerät (4) gesendeten Autorisierungsverifizierungsanforderung dazu, die erste Zahlungsoperation offline abzuschließen;
   Bestimmen (S504), ob eine Verifizierung an der Autorisierungsverifizierungsanforderung erfolgreich ist, falls die Verifizierung erfolgreich ist, Erzeugen des Authentifizierungsschlüssels des Benutzers und Berechnen eines dynamischen Zeitfaktors des ersten Serverendgeräts (3);
   Erzeugen (S505) eines Authentifizierungsfaktors unter Verwendung des Authentifizierungsschlüssels des Benutzers, des dynamischen Zeitfaktors und der Kontoinformationen des Benutzers;
   Ausgeben (S506) des Authentifizierungsfaktors an das zweite Endgerät (4), sodass das zweite Endgerät (4) den Authentifizierungsfaktor an das Mobilvorrichtungsendgerät (1) sendet;
   Empfangen (S507) von Bindungsauthentifizierungsinformationen, die durch das Mobilvorrichtungsendgerät (1) zurückgegeben werden und durch das zweite Endgerät (4) geliefert werden, wobei die Bindungsauthentifizierungsinformationen durch das Mobilvorrichtungsendgerät (1) durch Binden des Authentifizierungsfaktors und der Vorrichtungskontoinformationen des Mobilvorrichtungsendgeräts (1) erzeugt werden; und
   Durchführen (S508) einer Autorisierungsverifizierung an den Bindungsauthentifizierungsinformationen und Abschließen der Autorisierungsverifizierung nach erfolgreicher Autorisierung.

7. Verfahren nach Anspruch 6, das nach dem Schritt des Erzeugens des Authentifizierungsschlüssels des Benutzers ferner Folgendes umfasst:

   Erzeugen einer komprimierten Zeichenkette aus dem Authentifizierungsschlüssel des Benutzers und der Kontoinformationen des Benutzers, wobei die komprimierte Zeichenkette eine eineindeutige Abbildungsbeziehung mit dem Authentifizierungsschlüssel der Kontoinformationen des Benutzers aufweist; und
   Erzeugen des Authentifizierungsfaktors unter Verwendung des Authentifizierungsschlüssels des Benutzers, des dynamischen Zeitfaktors und der Kontoinformationen des Benutzers, was insbesondere Folgendes umfasst:
   Erzeugen des Authentifizierungsfaktors unter Verwendung des Authentifizierungsschlüssels des Benutzers, der komprimierten Zeichenkette und des dynamischen Zeitfaktors.

8. Einrichtung, die Folgendes umfasst:

   ein Mobilvorrichtungsendgerät (1);
   ein zweites Endgerät (4);
   ein erstes Serverendgerät (3); und

ein zweites Serverendgerät (2);

wobei die Einrichtung zum Durchführen des Verfahrens nach einem der Ansprüche 1 bis 7 ausgelegt ist.

**Revendications**

1. Procédé d'interaction d'informations, comprenant :

   *A) la réalisation, par un premier terminal serveur (3), d'une liaison de compte en ligne sur un terminal de dispositif mobile (1), comprenant :*

   la réception (S401) d'une demande de vérification d'identité de compte envoyée par le terminal de dispositif mobile (1), la demande de vérification d'identité de compte convoyant des informations de compte d'un utilisateur du terminal de dispositif mobile (1) ;
   la détermination (S402) que la demande de vérification d'identité de compte réussit ou non la vérification, et l'envoi d'un résultat de vérification de vérification réussie au terminal de dispositif mobile (1) si la vérification réussit,
   la réception (S403) d'une demande de vérification d'autorisation, envoyée par le terminal de dispositif mobile (1), pour conclure la première opération de paiement hors ligne ;
   la détermination (S404) qu'une vérification sur la demande de vérification d'autorisation réussit ou non ;
   si la vérification réussit, la génération d'une clé d'authentification de l'utilisateur et le calcul d'un facteur de temps dynamique du premier terminal serveur (3) ;
   la génération (S405) d'un facteur d'authentification en utilisant la clé d'authentification de l'utilisateur, le facteur de temps dynamique et les informations de compte de l'utilisateur ;
   la délivrance (S406) du facteur d'authentification au terminal de dispositif mobile (1) ;
   la réception (S101), par le terminal de dispositif mobile (1), du facteur d'authentification délivré par le premier terminal serveur (3), le facteur d'authentification convoyant une clé d'authentification de l'utilisateur du terminal de dispositif mobile (1), les informations de compte de l'utilisateur et le facteur de temps dynamique, le premier terminal serveur (3) étant un terminal serveur qui conclut une opération de paiement après authentification du terminal de dispositif mobile lorsque le terminal de dispositif mobile (1) demande une première opération de paiement ;
   la génération (S 102), par le terminal de dispositif mobile (1), d'informations d'authentification liées en liant le facteur d'authentification à des informations de dispositif du terminal de dispositif mobile (1) et en renvoyant les informations d'authentification liées au premier terminal serveur (3), de telle sorte que le premier terminal serveur (3) réalise une autorisation par le biais de la première opération de paiement en fonction des informations d'authentification liées ;
   la réception (S407), par le premier terminal serveur (3), des informations d'authentification liées soumises par le terminal de dispositif mobile (1), les informations d'authentification liées étant générées en liant le facteur d'authentification et les informations de compte de dispositif ; et
   la réalisation (S408), par le premier terminal serveur (3), d'une vérification d'autorisation sur les informations d'authentification liées et la conclusion de la vérification d'autorisation après que l'autorisation a réussi ;

   *B) la demande, par le terminal de dispositif mobile (1), d'une première opération de paiement par le biais d'un second terminal serveur (2), lorsque le terminal de dispositif mobile (1) est dans un état hors ligne, la demande de la première opération de paiement comprenant :*

   la réception (S1031) d'une instruction d'affichage pour afficher l'identifiant graphique afin de conclure la première opération de paiement hors ligne ;
   la génération (S 1032) d'un identifiant graphique pour conclure la première opération de paiement hors ligne en fonction du facteur d'authentification, l'identifiant graphique convoyant des informations d'authentification de la première opération de paiement, les informations d'authentification de la première opération de paiement comprenant la clé d'authentification de l'utilisateur, des informations de compte de dispositif et un mot de passe dynamique, le mot de passe dynamique étant généré en fonction du facteur de temps dynamique, et les informations de compte de dispositif étant générées en fonction des informations de compte de l'utilisateur et des informations de dispositif du terminal de dispositif mobile (1) ;
   après la génération de l'identifiant graphique pour conclure la première opération de paiement hors ligne en fonction du facteur d'authentification, l'affichage (S1033), par le terminal de dispositif mobile (1), de l'identifiant graphique, afin de conclure la première opération de paiement dans un état hors ligne en utilisant l'identifiant graphique ;

l'acquisition (S201), par le second terminal serveur (2), des informations d'authentification de la première opération de paiement convoyées dans l'identifiant graphique affiché sur le terminal de dispositif mobile (1) ;

*C) la réalisation d'une interaction entre le second terminal serveur (2) et le premier terminal serveur (3) pour réaliser la première opération de paiement, la réalisation de l'interaction comprenant :*

la génération (S202), par le second terminal serveur (2), d'une première demande de paiement en utilisant les informations d'authentification de la première opération de paiement et des données de service ;

l'envoi de la première demande de paiement au premier terminal serveur (3), de telle sorte que le premier terminal serveur (3) réalise une authentification en fonction des informations d'authentification de la première opération de paiement convoyées dans la première demande de paiement ;

la réception (S301), par le premier terminal serveur (3), de la première demande de paiement envoyée par le second terminal serveur (2) ;

la réalisation (S302), par le premier terminal serveur (3), d'une authentification conformément aux informations d'authentification convoyées dans la première demande de paiement, la réalisation (S302) comprenant la vérification qu'une relation liante entre les informations de compte de dispositif et la clé d'authentification qui sont convoyées dans les informations d'authentification de la première opération de paiement est correcte ou non, et la vérification que le mot de passe dynamique est valide ou non en fonction du facteur de temps dynamique dans le facteur d'authentification, dans lequel, dans l'affirmative, l'authentification réussit ;

la conclusion (S303), par le premier terminal serveur (3), de la première opération de paiement lorsque l'authentification réussit ; et

la réception (S203), par le second terminal serveur (2), d'un résultat de la première opération de paiement renvoyé par le premier terminal serveur (3).

2. Procédé selon la revendication 1, un mode d'affichage de l'identifiant graphique comprenant un code à barres ou un code QR, ou une combinaison de ceux-ci ; et

après l'étape d'affichage, par le terminal de dispositif mobile (1), de l'identifiant graphique, le procédé comprenant en outre :

la commutation (S1034) du mode d'affichage de l'identifiant graphique lors de la réception d'une instruction de commutation pour le mode d'affichage de l'identifiant graphique.

3. Procédé selon la revendication 1, dans lequel le terminal de dispositif mobile (1) reçoit, par le biais d'un second terminal (4), le facteur d'authentification délivré par le premier terminal serveur (3) ; et renvoie les informations d'authentification liées au premier terminal serveur (3) par le biais du second terminal (4).

4. Procédé selon la revendication 1, dans lequel le mot de passe dynamique reste inchangé dans une même fenêtre de temps, et dans une fenêtre de temps suivante, le mot de passe dynamique est régénéré en fonction du facteur de temps dynamique, afin de changer dynamiquement.

5. Procédé selon la revendication 1, dans lequel le mot de passe dynamique est obtenu spécifiquement par le biais d'un calcul en utilisant la clé d'authentification de l'utilisateur, le facteur de temps dynamique, les informations de compte de dispositif et une longueur de mot de passe prédéfinie conformément à un procédé de calcul de mot de passe à usage unique.

6. Procédé selon la revendication 3, dans lequel l'étape de réalisation, par le premier terminal serveur (3), de la liaison de compte en ligne sur le terminal de dispositif mobile (1) comprend spécifiquement :

la réception (S501) d'une demande de vérification d'identité de compte envoyée par le second terminal (4), la demande de vérification d'identité de compte convoyant les informations de compte de l'utilisateur ;

la détermination (S502) que la demande de vérification d'identité de compte réussit ou non la vérification, et l'envoi d'un résultat de vérification de vérification réussie au second terminal (4) si la vérification réussit ;

la réception (S503) d'une demande de vérification d'autorisation, envoyée par le second terminal (4), pour conclure la première opération de paiement hors ligne ;

la détermination (S504) que la vérification sur la demande de vérification d'autorisation réussit ou non, si la vérification réussit, la génération de la clé d'authentification de l'utilisateur et le calcul d'un facteur de temps dynamique du premier terminal serveur (3) ;

la génération (S505) d'un facteur d'authentification en utilisant la clé d'authentification de l'utilisateur, le facteur de temps dynamique et les informations de compte de l'utilisateur ;

la délivrance (S506) du facteur d'authentification au second terminal (4), de telle sorte que le second terminal (4) envoie le facteur d'authentification au terminal de dispositif mobile (1) ;

la réception (S507) d'informations d'authentification liées qui sont renvoyées par le terminal de dispositif mobile (1) et soumises par le second terminal (4), les informations d'authentification liées étant générées par le terminal de dispositif mobile (1) en liant le facteur d'authentification et les informations de compte de dispositif du terminal de dispositif mobile (1) ; et

la réalisation (S508) d'une vérification d'autorisation sur les informations d'authentification liées et la conclusion de la vérification d'autorisation après que l'autorisation a réussi.

7. Procédé selon la revendication 6, comprenant en outre, après l'étape de génération de la clé d'authentification de l'utilisateur :

la génération d'une chaîne compressée à partir de la clé d'authentification de l'utilisateur et des informations de compte de l'utilisateur, la chaîne compressée ayant une relation de mappage biunivoque avec la clé d'authentification et les informations de compte de l'utilisateur ; et

la génération du facteur d'authentification en utilisant la clé d'authentification de l'utilisateur, le facteur de temps dynamique et les informations de compte de l'utilisateur, laquelle comprend spécifiquement : la génération du facteur d'authentification en utilisant la clé d'authentification de l'utilisateur, la chaîne compressée et le facteur de temps dynamique.

8. Appareil comprenant :

un terminal de dispositif mobile (1) ;

un second terminal (4) ;

un premier terminal serveur (3) ; et

un second terminal serveur (2) ;

l'appareil étant configuré pour réaliser le procédé selon l'une quelconque des revendications 1 à 7.

**FIG. 1**

**FIG. 2**

S101

A terminal receives an authentication factor issued by a first server terminal

S102

Generate bound authentication information by using the authentication factor and device information of the terminal, and return the bound authentication information to the first server terminal

S103

Generate a graphical identifier for an offline first service operation according to the authentication factor, the graphical identifier carrying authentication information of the first service operation

**FIG. 3a**

S1031

The terminal receives a display instruction for displaying the graphical identifier for offline payment

S1032

The terminal generates the graphical identifier according to the authentication factor

S1033

The terminal displays the graphical identifier

S1034

Switch a displaying mode of the graphical identifier when a switch instruction for the displaying mode of the graphical identifier is received

**FIG. 3b**

S201

A second server terminal acquires payment
authentication information carried in a first graphical
identifier displayed on a terminal

S202

Generate a payment request by using the payment
authentication information and service data, and send the
payment request to the first server terminal, such that the
first server terminal performs payment authentication
according to the payment authentication information
carried in the payment request, and performs payment
when the payment authentication is successful

S203

Receive a payment result returned by the first server
terminal

## FIG. 4  4

S301

A first server terminal receives a payment request sent by a
second server terminal, the payment request carrying payment
authentication information and service data, and the payment
authentication information including an authentication key,
device account information, and a dynamic password

S302

Perform payment authentication according to the
payment authentication information carried in the
payment request

S303

The first server terminal performs payment when the
payment authentication is successful

## FIG. 5a

S401

Receive an account identity verification request sent by the terminal, the account identity verification request carrying account information of a user

↓ S402

Judge whether the account identity verification request passes verification, and send a result of successful verification to the terminal if the verification is successful

↓ S403

Receive a verification request for offline payment authorization verification sent by the terminal

↓ S404

Judge whether verification on the verification request is successful, if the verification is successful, generate an authentication key of the user, and calculate a dynamic time factor of the first server terminal

↓ S405

Generate an authentication factor by using the authentication key, the dynamic time factor, and the account information of the user

↓ S406

Issue the authentication factor to the terminal

↓ S407

Receive bound authentication information submitted by the terminal, the bound authentication information being generated by binding the authentication factor and the device account information

↓ S408

Perform authorization verification on the bound authentication information, and complete the offline payment authorization verification when authorization is successful

# FIG. 5b

S501

Receive an account identity verification request sent by the second terminal, the account identity verification request carrying account information of a user

S502

Judge whether the account identity verification request passes verification, and send a result of successful verification to the second terminal if the verification is successful

S503

Receive a verification request for offline payment authorization verification sent by the second terminal

S504

Judge whether verification on the verification request is successful, if the verification is successful, generate an authentication key of the user, and calculate a dynamic time factor of the first server terminal

S505

Generate an authentication factor by using the authentication key, the dynamic time factor, and account information of the user

S506

Issue the authentication factor to the second terminal

S507

Receive bound authentication information that is returned by the terminal and submitted by the second terminal, the bound authentication information being generated by binding the authentication factor and device account information

S508

Perform authorization verification on the bound authentication information, and complete the offline payment authorization verification when authorization is successful

**FIG. 5c**

**Account scanning payment flow**

| Terminal (bound) | Foreground code-scanning end | Back-end server terminal | Payment server terminal |
|---|---|---|---|

S601 — Switch to a presentation interface of a graphical identifier

Determine the order content and amount with a user

S6 — Generate authentication information (a bar code or a QR code) according to an authentication factor

S603, S604, S605 — Present the graphical identifier according to the interface and a type of a scanning gun

Scan by using the code scanning gun

Successfully acquire the authentication information

Local data processing

S606 — Generate a payment request

Check the payment request

Extract merchant information, authentication information, and payment information

S607, S608 — Generate a payment request at the server terminal

S609 — Authenticate

S610 — Pay

S611 — Return ← Return ← Return

S612 — Confirm a payment result with merchant staff

Payment ends

# FIG. 6

Terminal | Payment server terminal

S701 — Account login — Account identity verification request → Account identity verification

S702 — Identity verification is successful — Y

S703 — Account offline payment authorization — Offline payment authorization verification request — Account offline payment authorization verification — End with failure

S704 — Authorization verification is successful — N → End with failure

S705 — Generate an authentication key

S706 — Generate a compressed string from the authentication key and account information

S707 — Calculate a server terminal time, to obtain a dynamic time factor

S708 — Obtain an authentication factor: including the authentication key, the dynamic time factor of the server terminal, and the account information

S709 — Communication encryption processing

S710 — Parse the authentication factor ← Return the authentication factor

S711 — Submit payment account bound authentication information → Parse the bound authentication information, and check whether the authorization is successful according to the account, the authentication key, and the time

S712 — Authorization is successful — Y

S713 — Payment authorization is successful

End with success

**FIG. 7**

27

Second terminal (mobile phone) | Payment server terminal

S801 — Account login

Account identity verification request → Account identity verification

S802 — Identity verification is successful

Offline payment authorization verification request

S803 — Account offline payment authorization

S804 — Account offline payment authorization verification → End with failure

Authorization verification is successful

S805 — Generate an authentication key

S806 — Calculate a server terminal time, to obtain a dynamic time factor

S807 — Obtain an authentication factor: including the authentication key, the dynamic time factor of the server terminal, and the account information

S808 — Communication encryption processing

S809 — Parse the authentication factor ← Return the authentication factor

Terminal (watch)

S810 — Write the authentication factor into a watch — Receive the authentication factor

S811 — Encrypted storage

S812 — Acquire the bound authentication information — Generate bound authentication information

S813 — Return the bound authentication information — Parse the bound authentication information, and check whether the authorization is successful according to the account, the authentication key, and the time

S814 — Submit payment account bound authentication information

S815 — Authorization is successful

S816 — Payment authorization is successful

End with success

**FIG. 8**

901

Receiving unit

902

Binding unit

903

Sending unit

904

Processing unit

**FIG. 9**

1001

Acquisition unit

1002

Processing unit

1003

Sending unit

3

Payment server terminal

1004

Receiving unit

**FIG. 10**

FIG. 11

1201

Display

1202

Processor

1204

Communication
module

1203

Memory

**FIG. 12**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2478712 A
- US 2013282589 A1
- US 2013238503 A1